# EUROPEAN PATENT SPECIFICATION

(11) **EP 1 419 665 B1**
(45) Date of publication and mention of the grant of the patent: **01.10.2008**
(21) Application number: 02743403.4
(22) Date of filing: 02.07.2002
(51) Int. Cl.: H04Q 7/22

(54) **ROUTING OF OUTGOING MESSAGES FROM A MOBILE TERMINAL**
LEITWEGLENKUNG VON AUSGEHENDEN NACHRICHTEN AUS EINEM MOBILENDGERÄT
ACHEMINEMENT DE MESSAGES SORTANTS D'UN TERMINAL MOBILE

(30) Priority: 06.07.2001 GB 0116592
(43) Date of publication of application: 19.05.2004
(73) Proprietor: Interoute Communications Limited, London E14 9SG (GB)
(72) Inventor: DE BEER, Léon, Berkshire, RG14 7RG (GB)
(74) Representative: Flegg, Christopher Frederick
(86) International application number: PCT/GB2002/003036
(87) International publication number: WO 2003/005738

(56) References cited:
- WO-A-01/08428
- WO-A-98/56195
- WO-A-99/04578
- WO-A-99/57926

## Description

This invention relates to the routing of messages within a telecommunications system and in particular but not exclusively to mobile terminals such as mobile telephones capable of sending text messages in the SMS format within a GSM system. The invention also has application to WAP enabled mobile telephones and the routing of messages via selected gateways to the internet.

The GSM (Global System for Mobile Communications) standard for telecommunications has been widely adopted in many countries and continues to evolve with more sophisticated services. The SMS (Short Message Service) allows mobile terminals such as mobile telephones to send and receive text messages, SMS having been created as part of the GSM phase 1 standard. Each short message comprises up to 160 characters. The sending of such text messages has become increasingly popular as a generally low cost alternative to voice mail messages and they provide a simple and easily accessed alternative to email.

A mobile terminal generating an outgoing SMS message prepares the message in packet form in which the message content is accompanied by a header which includes a number of fields including address information. The address information includes not only the address of the intended call destination but the address of an SMSC (Short Message Service Centre) via which the message packet is to be routed. The SMSC performs a store-and-forward function to route the message packet onwards to the call destination terminal at a time when it is able to receive it. The SMSC also extracts information for administration and billing purposes and passes this information to the appropriate network entity.

The GSM system is a cellular mobile system in which a number of different network operators provide cellular networks in communication with other like networks and with land line networks. Operators of different networks compete with different tariffs and levels of service and the GSM system caters for user selection of network services in a variety of ways.

Typically the mobile terminal contains a SIM (Subscriber Identity Module) in the form of a smart card containing in its memory a unique identifier and subscriber information which identifies the mobile terminal with a home network controlled by a home network operator with whom a subscriber has a contractual relationship for allowing use of the mobile terminal within the GSM system. The SIM card now has a multitude of functions and is capable of interacting with the processor of the mobile terminal in a manner which is standardised to allow interchangeability of SIM cards with different mobile terminal equipment. The European Telecommunications Standards Institute (ETSI) technical specification TS101267 defines a standard for the interface between SIM card and mobile equipment, referring to a SIM Application Toolkit. For example, the Application Toolkit utilises an "Envelope" command for the transparent transfer of data between the mobile terminal processor and the SIM card, for example when the data is received in an SMS message either by point to point or cell broadcast with CB, thereby enabling data in the SIM card to be updated on receipt of broadcast information. A further facility which can be activated by the SIM card is that of "Mobile Originated Short Message control by the SIM". When activated, the mobile equipment processor passes address information for short messages to the SIM card before the mobile equipment processor sends the short message for transmission. The SIM card may then allow or disallow the sending of the SMS message and may modify the sending address of the short message.

Further details of the interface between mobile equipment processor and SIM card are described in the ETSI technical specification ETSI TS100799.

This ETSI technical specification refers to Elementary Files stored in the SIM card and defines a naming scheme for elementary files for different purposes.

The home network for the mobile terminal subscriber is responsible for collecting billing information for telecommunications services including voice and SMS services and obtaining payment from the subscriber. An increasingly popular option is for mobile telephone use to be on the basis of a pre-paid subscription in which vouchers or credits are purchased in advance by a user, rather than the accumulated cost of services being billed after use.

It is common practice for the home network operator to provide as part of its mobile network infrastructure the SMSC used by its own subscribers when they use the mobile terminal to send SMS messages to a call destination. This makes coordinated billing and administration for different services a simple task and in particular presents no bar to the use of prepaid subscriber services in which the subscriber acquires credits in advance for use of network services. It is also possible for a home network operator to make use of an independently operated SMSC, for example, if its own facilities are unable to cope with the volume of SMS traffic or if the independent SMSC is able to provide enhanced services.

It is a feature of the GSM system that a mobile terminal is able to generate outgoing SMS messages containing an SMSC address belonging to an SMSC which is selected by the user of the mobile terminal. This arises because mobile terminals such as mobile telephones store the address of the SMSC in the memory of the SIM card in a file which is commonly preconfigured with the preferred SMSC address of the home network but can be accessed and updated by the user. The user may for example be able to enter a new address via a keypad of the mobile terminal or by selection from a menu.

The motivation for using a different SMSC from the point of view of the subscriber is that competing network operators charge different prices for handling SMS messages so that a subscriber could benefit from accessing a less expensive SMSC controlled by a network operator other than the home network.

WO01/08428 describes operating a mobile terminal to send SMS messages using a database of SMSC numbers of available SMSC service providers with associated fee price lists to select most economical routing

WO99/04578 describes routing telephone calls by selecting a preferred route from a look up table which is periodically updated with updating information transmitted by radio broadcast from a control centre.

WO99/57926 describes routing SMS messages at a local message centre computer by referring to a routing table to find a message address.

WO98/56195 describes routing of SMS messages to a selected SMSC which is identified from an identifier included in the generated SMS and using routing information located by means of a database search.

When a message packet is routed by an SMSC which is other than the home network's own SMSC, the SMSC will in general generate billing information which is then passed to the home network using information contained in the message packet header and which allows the SMSC to identify the home network.

11 however the subscriber is using a prepaid subscription facility, the home network operator may under these circumstances be unable to recover the cost from the subscriber, if for example the subscriber has insufficient credit remaining.

It is therefore known for mobile terminals intended for use in a prepaid subscription service to be provided with facilities for making outgoing SMS services which are only operable when the mobile terminal is registered with the home network for telecommunications traffic. The making of outgoing SMS messages is therefore barred whenever the mobile terminal is "roaming", i.e. registered with a different network. From the point of view of the home network, this allows the home network operator to prevent the occurrence of SMS messages which cannot be billed to subscribers with prepaid subscription accounts. A disadvantage of this arrangement from the point of view of the subscriber is that, when travelling abroad, it will not generally be possible to register with the home network due to the limited geographical extent of networks so that the making of SMS outgoing massages will not be an available facility for a prepaid subscription user.

A similar problem exists in the context of WAP enabled telephones in which outgoing messages, such as a URL request, include the address of a gateway via which access to the internet is obtained. The home network operator may have a specific preference for which gateway is to be utilised for the making of such data calls and there therefore remains a need to provide an improved method and apparatus for controlling the selection of gateway address.

More generally, data messages in a mobile telecommunications system may be routed via a routing centre selected from a plurality of available couting centres. The present, invention has application therefore more generally to the selection of an address for a routing centre to be included in a message data field originating in the mobile terminal.

Aspects of the present invention are set out in the appended independent claims.

Preferred embodiments of the present invention will now be described by way of example only and with reference to the accompanying drawings of which:
Figure 1 is a schematic diagram of mobile telephone operation;
Figure 2 is a schematic diagram of the internal structure of a mobile telephone fitted with a SIM card;
Figure 3 is a schematic diagram of the structure of a SIM card;
Figure 4 is a schematic diagram of the applications contained in a SIM card;
Figure 5 is a schematic diagram of the contents of a SMS message;
Figure 6 is a flow chart illustrating the manner in which a mobile terminal functions during a first stage of generating an outgoing SMS message;
Figure 7 is a flowchart illustrating the corresponding function of the SIM card;
Figure 8 is a flowchart illustrating a second stage performed by the mobile terminal when generating an outgoing SMS message;
Figure 9 is a schematic diagram illustrating the manner in which programs may be transmitted and stored for use in the embodiments;
Figure 10 is a schematic diagram of a WAP mobile telephone in use to generate an outgoing message; and
Figure 11 is a schematic diagram of a WAP message.

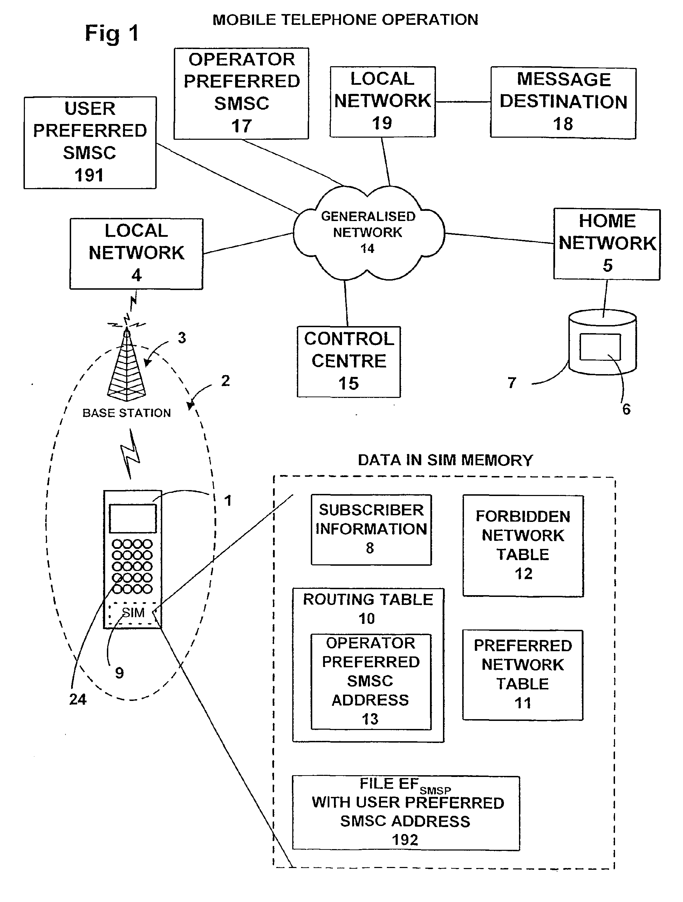

Figure 1 illustrates schematically a mobile telephone 1 operating in a GSM cellular telecommunications system in which communication over an air interface 2 is established between the telephone and a base station 3.

The mobile telephone 1 is illustrated as being registered with a local network 4 which is accessible via a number of such base stations 3 providing coverage geographically in a cellular configuration and which communicates with other mobile and landline networks, illustrated in Figure 1 by generalised network 14, for telecommunications traffic including the routing of message packets containing SMS messages as well as voice and other data communications.

A home network 5 has subscriber records 6 stored in a database 7 and administers a prepaid subscription account with a user of the mobile telephone 1, the mobile telephone being uniquely identified by subscriber information 8 which is stored in a SIM card 9 within the mobile telephone. The registration of the mobile telephone 1 with the local network 4 rather than the home network 5 may be by user choice or by necessity, for example when geographical location demands, and such registration with networks other than the home network is referred to as "roaming".

The SIM card 9 also stores as a data file a routing table 10 enabling the mobile telephone 1 to automatically route voice and data communications via a least cost route within the generalised network 14 in accordance with data contained in the routing table, and the SIM card also includes a preferred network table 11 and forbidden network table 12 used in regulating the manner in which local network selection is carried out for registration purposes under circumstances where more than one network is available for registration. One of the fields of the routing table 10 is dedicated to an operator preferred SMSC address 13 for routing SMS messages to the operator preferred SMSC 17. Write-access by the user to write data to the memory file storing the operator preferred SMSC address 13 is prohibited.

The SIM card also stores a data file 192 referred to as Elementary File EF_{SMSP} accessible to the user and containing a user preferred SMSC address for use in controlling the routing of outgoing SMS messages in accordance with the preference of the subscriber. The user preferred SMSC address is a telephone number of a user preferred SMSC 191, i.e. the SMSC which the user or subscriber would prefer to route the SMS message to the destination 18.

A control centre 15 accessible for communication via the generalised network 14 is responsible for preparing the routing tables 10 for downloading to mobile terminals including the mobile telephone 1, the downloading of new tables being effected by SMS messages broadcast over the air interface 2.

Also shown in Figure 1 is an operator preferred SMSC 17 which is the SMSC preferred by the operator of the home network 5 for forwarding SMS message originating from the mobile telephone 1 to a message destination 18. The operator preferred SMSC 17 is in this example an independent SMSC which has been designated by the home network 5 to carry all SMS message traffic originating from subscribers of the home network operator. The home network 5 therefore has in place agreed protocols for billing information to be communicated between the operator preferred SMSC 17 and home network 5 for the billing of SMS messages. In the example of Figure 1, the message destination 18 is accessed via a further local network 19, as for example in the case where the message destination 18 is a further mobile telephone which is presently registered with the further local network 19.

The SIM card 9 of the mobile telephone 1 is configured to enable the home network operator 5 to override user preference and control the addressing of SMS messages such that the operator preferred SMSC 17 is utilised when sending SMS messages. The sequence of events in sending a typical message is initiated by the user turning on the mobile telephone 1, followed by a registration procedure in which the mobile telephone registers with local network 4. As a precursor to this registration procedure, the mobile telephone 1 performs a scanning operation to determine the available networks for registration and consults the preferred network table 11 and forbidden network table 12 stored in the SIM card 9 before making the final selection.

The local network 4 during registration will establish communication with the home network 5 identified by data in the SIM card 9 in order to confirm subscriber information 8 obtained from the SIM card and the billing status as indicated by the subscriber records 6.

The user of the mobile telephone 1 prepares the subject matter to be sent in an SMS message, typically comprising text entered using a keypad 24 of the mobile telephone. The user then enters the digits identifying the address of the message destination 18 which typically will be a telephone number entered in the keypad 24 or accessed from a memory. Optionally, the user may additionally enter the address of the user preferred SMSC 191, this user preferred SMSC address 192 being written into the file EF_{SMSP}. Alternatively, if the user does not enter any SMSC address, the value of the address stored in the file EF_{SMSP} remains unaltered and is equal either to a previously entered value or a default value determined when the SIM card is initialised. For the purpose of an initial example, it will be assumed that the user has entered an address which corresponds to the operator preferred SMSC 17 so that in Figure 1 the user preferred SMSC 191 and operator preferred SMSC 17 are one and the same. The user then activates a "send" button of the mobile telephone 1 to initiate the message sending process.

A message packet is output from the mobile telephone 1 which includes the address of the operator preferred SMSC 17. The message is therefore routed via the local network 4 and the generalised network 14 to the preferred SMSC 17.

The preferred SMSC 17 performs a store and forward function such that a determination is made as to whether the message destination 18 is able to receive the SMS message. When the message destination 18 is available, the SMS message is forwarded via the generalised network 14 and local network 19 to be received by the message destination 18.

Billing information for the SMS message is passed from the SMSC 17 to the home network 5 and the subscriber records 6 are updated to record the remaining credit.

In a second example, the user enters an SMSC address corresponding to a user preferred SMSC 191 which is different from the operator preferred SMSC 17. (Alternatively, the existing stored value of address in EF_{SMSP} is used without user intervention and the address is different from the operator preferred address.) In this instance, as described in greater detail below, the outgoing SMS message is trapped and the SMSC address contained in the message header is modified to correspond to the operator preferred SMSC address 13. The routing of the SMS message thereafter follows the above described route via the operator preferred SMSC 17, even though the user has expressly entered a different address (or the existing EF_{SMSP} defines a different address).

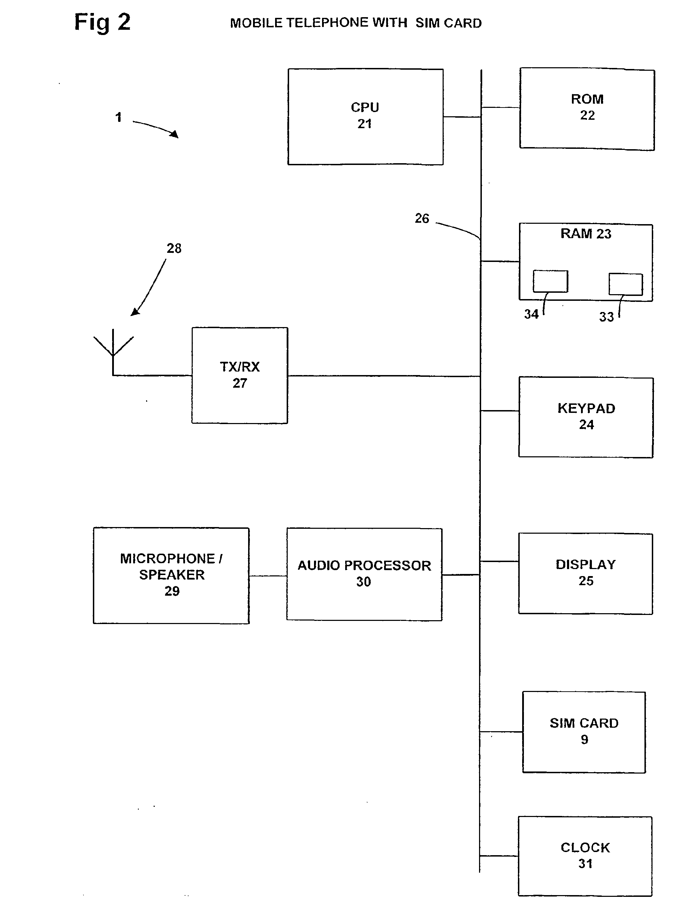

The structure of the mobile telephone 1 is illustrated in Figure 2 and includes an internal processor 21 which communicates with the processor of SIM card 9 via a databus 26. Also connected to the processor 21 by databus 26 are Read Only Memory (ROM) 22, Random Access Memory (RAM) 23, a keypad 24, display 25, and internal clock 31. An audio processor 30 and microphone/speaker unit 29 are also provided together with transmit and receive circuits 27 which are connected to antenna 28. The RAM 23 stores operating data and applications for the mobile telephone 1 including a message file 34 for storing an outgoing SMS message and a message handling program 33 which is used in generating outgoing SMS messages.

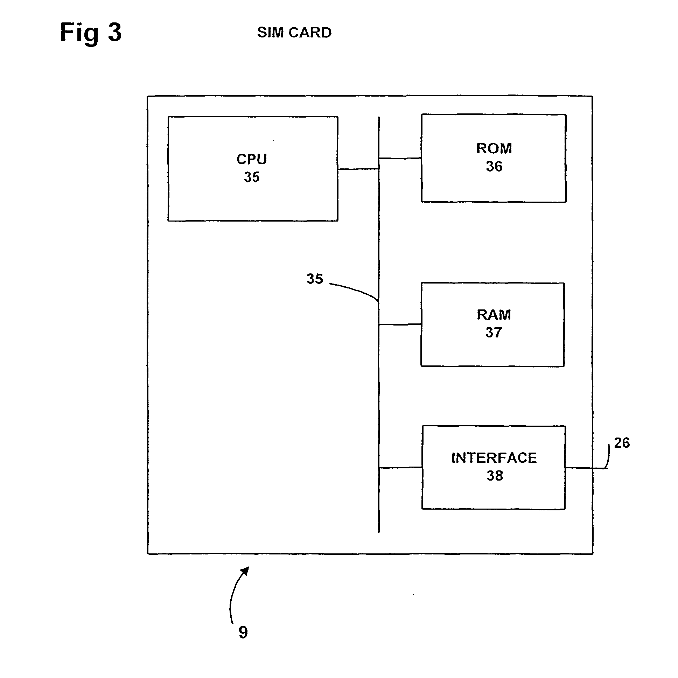

The internal structure of the SIM card 9 is illustrated schematically in Figure 3 and comprises SIM card processor 35, ROM 36, RAM 37 and an interface 38 for communication with the databus 26. The SIM card 9 is a portable integrated circuit device which is removably inserted into the mobile telephone 1.

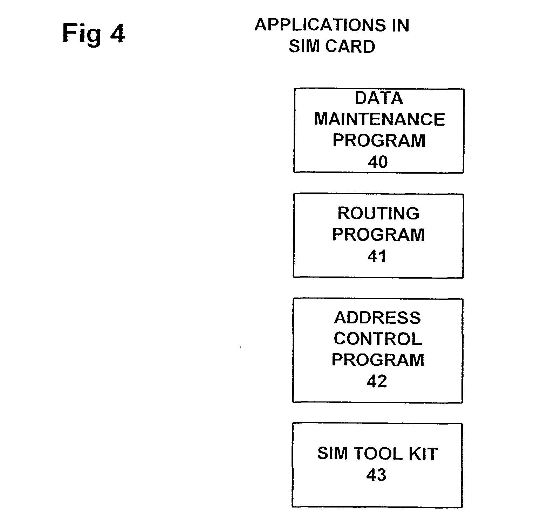

Figure 4 illustrates schematically the applications stored in the RAM 36 of the SIM card 9, including a data maintenance program 40, a routing program 41, SMSC address control program 42 and SIM Toolkit 43.

It is implicit in the above description that the mobile telephone 1 has software making the mobile telephone compliant with the SIM Toolkit facility under the GSM standards definition, the SIM Toolkit 43 being stored in the SIM card 9 and enabling the SIM card to alter the services provided by the mobile telephone and to act as a controlling interface between the mobile telephone and the air interface 2.

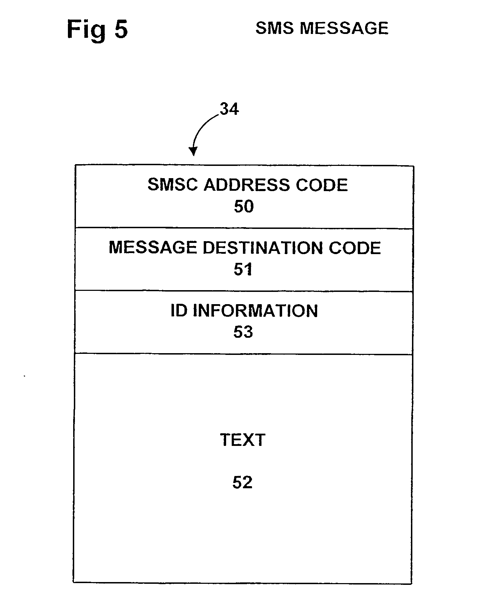

Figure 5 illustrates schematically the contents of the SMS message 49 constructed by the processor 21 of the mobile telephone 1, the message being stored as message file 34 comprising a first data field 50 containing SMSC address code, a second data field 51 containing message destination address code, a third field 53 containing ID information and a fourth field 52 containing text. The SMSC address code in field 50 is initially set to be identical to the code defined by the user preferred SMSC address read from the elementary file 192.

The message destination code in field 51 is obtained from the user input telephone number entered using the keypad 24. The ID information in field 53 is entered using subscriber information 8 read from the memory of the SIM card 9. The text in field 52 is generally entered manually using the keypad 24.

The message file 34 containing data fields 50, 51, 52 and 53 is stored temporarily in RAM 23 and, when the "send" signal is received by the user actuating keypad 24, the processor 21 prepares to send the SMS message.

However, the message handing program operated by the processor 21 is configured by the SIM toolkit 43 to trap any outgoing messages and send a notification to the SIM card processor 35 including details of the SMSC address code in field 50 and message destination code in field 51. The notification takes the form of an ENVELOPE command as defined in the GSM standard.

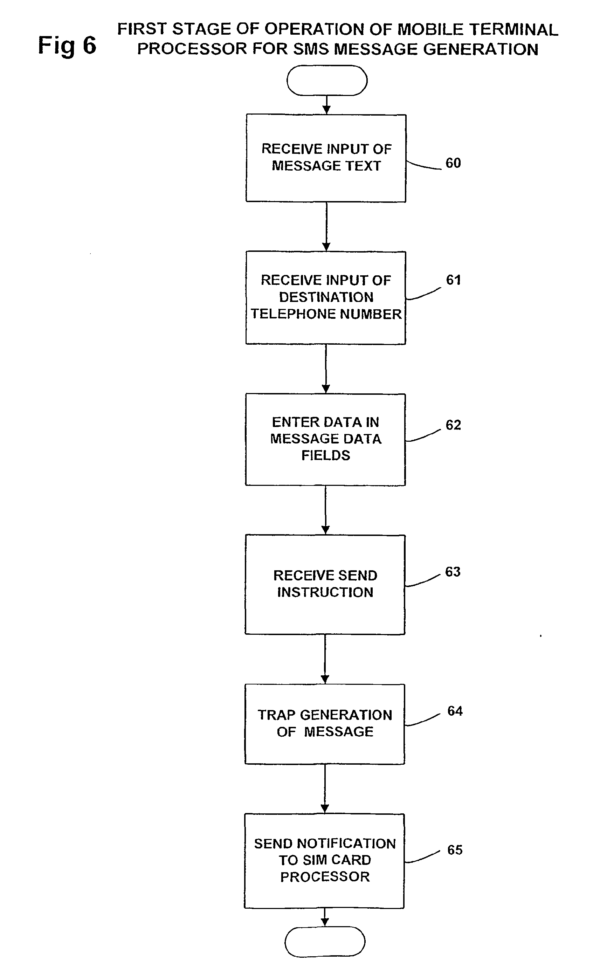

This procedure is illustrated in Figure 6 where at step 60, the processor 21 receives the input of message text and at step 61 receives the input of a message destination address, i.e. the telephone number of the intended destination for the message.

At step 62, the processor 21 enters data in fields 50 to 53 of the message file as illustrated in Figure 5. At step 63, the send instruction is received and at step 64 the generation of the SMS message is trapped. At step 65, the notification is sent to the SIM card processor 35.

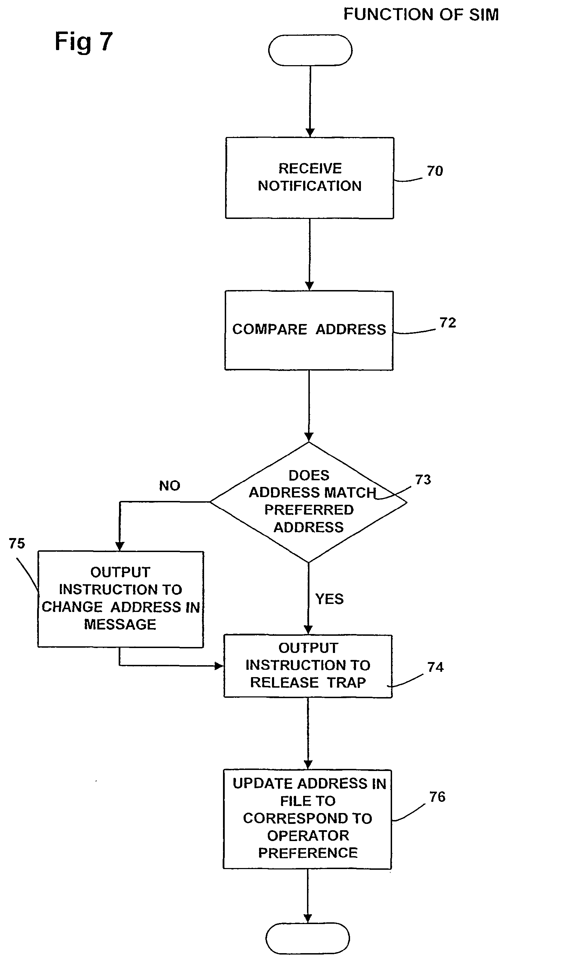

The function of the SIM card processor 35 in response to the notification from step 65 is illustrated in Figure 7. At step 70, the notification is received and at step 72 the SMSC address code in field 50 is compared with the operator preferred SMSC address 13 which is stored in RAM 37 of the SIM card. If the comparison step 73 determines that the addresses match, the SIM card processor 35 at step 74 outputs an instruction via the interface 38 for the internal processor 21 to release the SMS message. The SMS message is then output for routing to the SMSC address defined by the SMSC address code in field 50.

If however the comparison step 73 determines that the addresses do not match, the SIM card processor 35 outputs an instruction to the internal processor 21 to change the SMS address code stored in the message file 34 in field 50 to be that of the stored value of the operator preferred SMSC address 13.

The SIM card processor 35 then outputs at step 74 the instruction to release the SMS message which then is output to the SMSC address defined by the SMSC address code in field 50.

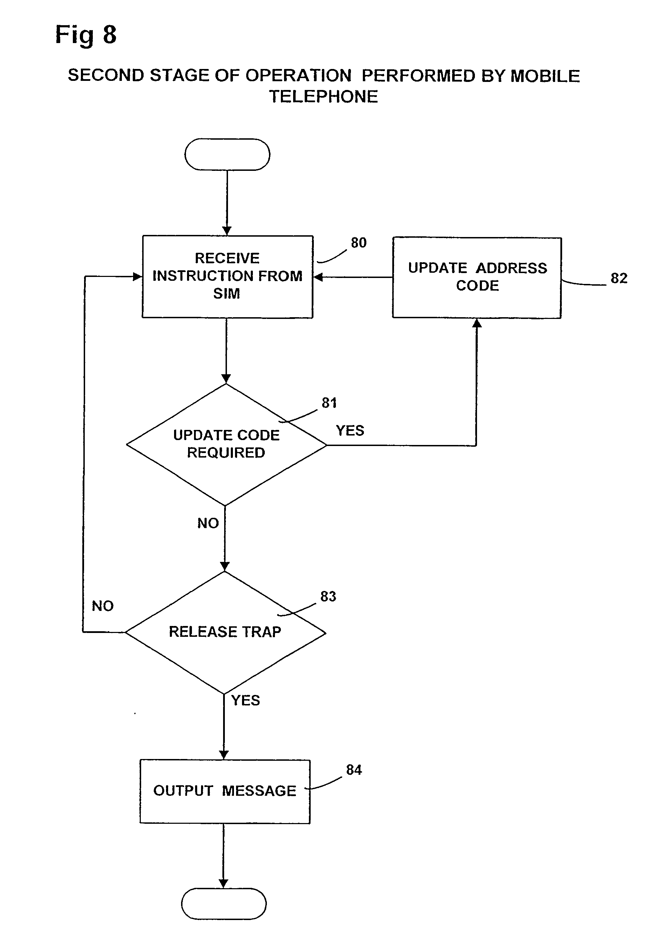

The second stage performed by the mobile telephone 1 is illustrated in Figure 8 where at step 80 an instruction is received from the SIM card 9, the instruction being generated either by step 74 or step 75 in Figure 7.

At step 81, the processor 21 determines whether the instruction is an instruction to update the SMSC address code in field 50 and, if so, the SMSC address code stored in field 50 of the message file 34 is updated at step 82. At this stage, the SMS message formatted as shown in Figure 5 is stored in the RAM 23 in message file 34 illustrated schematically in Figure 2 and includes SMSC address code corresponding to the operator preferred SMSC address 13 as stored in the SIM card 9.

The processor 21 awaits receipt of a further instruction from the SIM card 9 and, when a further instruction is received which is determined at step 83 to be an instruction to release the trapped message, the processor 21 initiates the outputting of the SMS message at step 84.

The SMS message is then processed and transmitted by the transmit circuit 27 to be received by base station 3. The message is routed to the preferred SMSC 17 via the local network 4 and generalised network 14. The operator preferred SMSC 17 performs its store and forward facility and ultimately routes the message via local network 19 to the message destination 18. Billing information is communicated to the home network 5.

The preferred SMSC address 13 stored in the SIM card 9 may be configured by the control centre 15. This may for example in response to a request by the operators of the home network 5.

To reconfigure the stored preferred SMSC address 13, the control centre 15 forwards a message to the mobile telephone 1 via the local network 4 where the processor 21 passes the contents of the message to the SIM card 9 for processing by the data maintenance program 40 operated by the processor 35.

The data maintenance program 40 determines whether the received message contains an instruction to reconfigure the operator preferred SMSC address 13 and if so causes the stored address to be overwritten by the newly received address.

In a preferred embodiment, the mobile telephone 1 utilises the stored routing table 10 to automatically optimise the routing of outgoing voice calls. This is achieved in the manner described for example in GB-A-2328117 where the routing table 10 is described as acting as a lookup table for determine prefix codes added to a dialled number. In this way, least cost routing is achieved for voice traffic originating from the mobile telephone 1.

The routing table 10 is periodically refreshed by a wireless broadcast originating from the control centre 15 and typically comprising one or more SMS messages.

The control centre 15 may therefore configure the messages containing the updated routing table information to additionally include information defining an updated preferred SMSC address 13.

On receiving such an updating message, the processor 35 of the SIM card 9 operates the data maintenance program 40 to update the stored routing table 10 including the operator preferred SMSC address 13. Subsequent routing of voice messages is controlled using the routing program 41 and the updated preferred SMSC address 13 is utilised by the SMSC address control program 42.

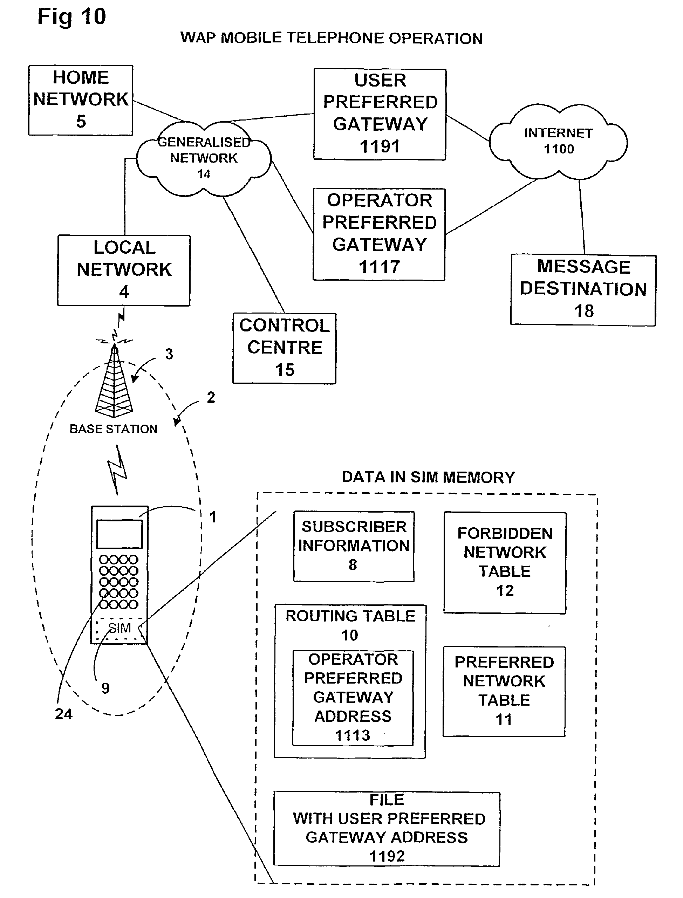

A second embodiment is illustrated in Figure 10 in which a WAP enabled mobile telephone is illustrated as being used to send a URL (Universal Resource Locator) request via the Internet 1100 to a message destination 18 which in this instance is a web server which responds by returning a data message to the telephone 1 in the form of code defining a web page.

The data message generated by the WAP enabled telephone 1 may be routed by any one of a number of gateways such as those represented in Figure 10 by user preferred gateway 1191 and operator preferred gateway 1117, each of these gateways acting as an Internet service provider, thereby providing an interface between generalised telecommunications network 14 which is accessed by mobile networks and the Internet 1100.

The data held in the SIM card memory 37 includes an operator preferred gateway address 1113 which is the telephone number of the operator preferred gateway 1117. The data in the SIM card memory 37 also includes a file 1192 containing the user preferred gateway address, i.e. the telephone number of the user preferred gateway 1191. In practice, the user preferred gateway address 1192 may be any address preconfigured into the SIM card memory and need not necessarily have been entered by the user. For ease of description however, the gateway address 1192 and the gateway 1191 are referred as being "user preferred" and this is correct to the extent that they refer to a gateway which is other than the operator preferred gateway 1117.

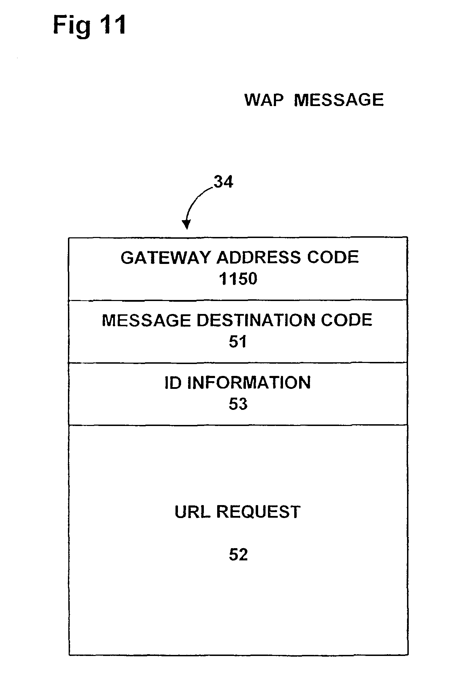

Figure 11 shows the structure of a message generated by the WAP enabled mobile telephone 1, the message comprising a gateway address code inserted in a first data field 1150, a message destination code inserted in a second data field 51, and ID information inserted in a third data field 53. The content of the message in the form of a URL request is contained in a fourth data field 52.

The method of operating the mobile telephone 1 in the embodiment of Figure 10 follows generally the above described method set out in the flowcharts of Figures 6, 7 and 8 to the extent that the initially prepared outgoing message is first trapped at step 64 and a notification sent at step 65 to the SIM card processor 35. This notification is forwarded to the SIM card 9 using the Mobile Originated Short Message control by SIM facility and uses an Envelope command to transfer the data from the internal processor 21 of the telephone 1 to the SIM card processor 35.

At step 72, the gateway address code in the data field 1150 is compared with the operator preferred gateway address 1113 stored in a file in SIM card memory 37 and, if at step 73 it is determined that the addresses match, the SIM card 9 outputs an instruction to the internal processor 21 to release the trap, following which at the message is output.

At step 76, the SIM card processor 35 updates the file 1192 to include the operator preferred gateway address in preference to the previously stored address.

According to the method of second embodiment, the home network 5 is able to ensure that the operator preferred gateway 1117 is always utilises. It is thereby able to override any user entered gateway address and to correct a situation where the currently stored operator preferred gateway address is superseded by a new requirement of the Operator. This may arise for example when a gateway address is included in the configuration of the SIM card when the telephone is initially purchased and at some time later the operator designates a new preferred gateway. The new gateway address can be downloaded to the SIM card 9 for example as part of routing table 10 in a wireless broadcast. Any subsequent use of the mobile telephone 1 to generate an outdoing message will automatically have the gateway address corrected and the file 1192 updated to include the correct gateway address.

Various alternative embodiments are possible within the scope of the appended claim. The above described embodiments may for example omit the use of a routing table 10 and routing program 41. The operator preferred gateways address 1113 of the second embodiment and the operator SMSC address 13 of the first embodiment may therefore exist as separate file contained in SIM card memory and may be updated by downloading updating data contained in wireless broadcast. A suitable form of broadcast is an SMS message although other forms of broadcast and other forms of protocols may be utilised where appropriate.

The first embodiment is described as using a specific elementary tile 192 for the storage of the address of the SMSC. Alternative embodiments are proposed in which different files are used for the storage of this address.

Reference is made to entering the user generated message using the keypad 24 of the mobile telephone 1. The text or other information may be input by other means such as by communication with a peripheral or accessory device to the mobile telephone 1. More generally, alternative embodiments utilise mobile terminals which are not mobile telephones per se and may be any one of a number of new generation devices capable of connection to mobile telecommunications systems such as the GSM system. Not all of these devices are capable of voice message transmission, some devices being totally dedicated to data transmission in the form of text or images. Personal Digital Assistants are an example of apparatus which may function as a mobile terminal as an embodiment of the present invention. The above description should therefore be understood to apply equally to mobile terminals whenever reference is made in the specific examples to a mobile telephone.

In the preferred embodiments, reference is made to the GSM system. Other systems and protocols whether existing or proposed for future implementation may similarly have a need for the message address to be checked and if necessary replaced in the manner described above in the GSM system. Further embodiments are therefore envisaged in which mobile terminals operating in such systems and protocols perform the above described method steps for messages, including by way of example short messages and URL request messages via the internet. Additional embodiments are envisaged in which mobile terminals do not include a SIM card and all of the method steps of comparing and replacing addresses are performed by a single processor. The method performed in such embodiments corresponds generally to the method flowcharts of Figures 6, 7 and 8 with the exception that there is no need for the transfer of instructions between internal processor 21 and SIM card processor 35.

Further embodiments are also envisaged in which the location in memory of files such as the operator preferred address file is other than as shown in Figures 1 and 10. The memory of the mobile terminal such as RAM 23 in Figure 2 may be utilised for storage of one or more of the address files, routing table file and other files as may be convenient.

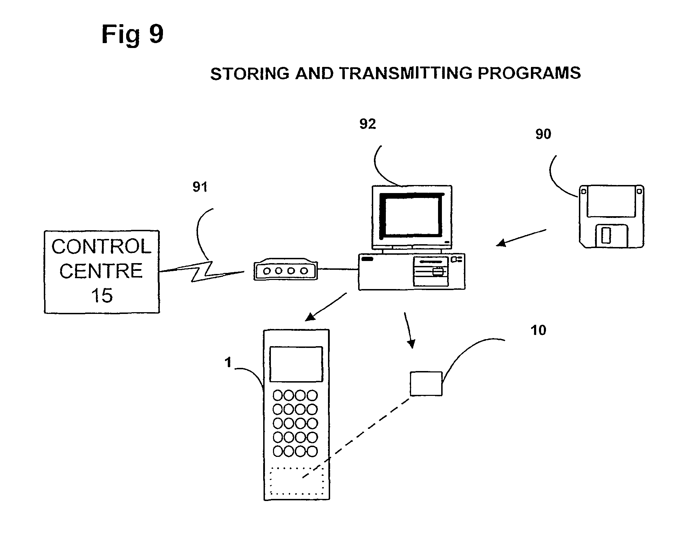

The programs used in the SIM card 9 and internal processor 21 of the mobile terminal 1 may be installed using a personal computer 92, the programs being initially stored on a portable storage medium such as a floppy disk 90, as illustrated in Figure 9. Alternatively, the personal computer 92 may obtain the programs as signals 91 communicated over a network such as the Internet 1100 from control centre 15. Further aspects of the present invention therefore include the above-mentioned programs, a storage medium containing such programs and signals representative of the programs, wherein the programs define the steps of the above described methods.

In the above described embodiments, reference is made to an operator preferred SMSC address. The operator in this context may be a network operator of the telecommunications system or another administrator, such as a virtual network operator having a leasing arrangement with a network operator for use of a network. References to an operator preferred SMSC should therefore be understood where appropriate to include more generally an administrator preferred SMSC address and actions to update the address should correspondingly be understood to be initiated by the administrator.

## Claims

1. A method of operating a mobile terminal (1) in a mobile telecommunications system in which data messages are routed to a destination (18) having a destination address via a routing centre (17) selected from a plurality of available routing centres (191,17);
the method comprising:
receiving (60) user generated data defining data content (52) of an outgoing message;
generating a message (34) including a first data field (50) containing a first routing centre address defining a network address of a first routing centre (191), a second data field (51) containing the destination address, and a third data field (52) containing the user generated data; and
receiving (63) an instruction to send the message;
**characterised by**;
trapping (64) the outgoing message;
actuating a processor to compare (72) the first routing centre address with a second routing centre address stored in a memory (13) to which the user does not have write access and wherein the second routing centre address is determined by an administrator of the telecommunications system, and, if the addresses are different, replacing (75) the first routing centre address by the second routing centre address in the data field; and
releasing (74) the outgoing message for being routed via a second routing centre (17) identified by the second routing centre address.

2. A method as claimed in claim 1 wherein the first routing centre address is stored in a first memory file (192) to which the user has write-access and wherein the step of generating the message comprises transferring the first routing centre address from the first memory file to the first data field of the message.

3. A method as claimed in claim 2 wherein the first memory file is located in a SIM card (9).

4. A method as claimed in any of claims 2 and 3, including a step after the comparing step of updating (82) the first memory file to contain the second routing centre address.

5. A method as claimed in any preceding claim wherein the generating step comprises receiving the first routing centre address from an input of user generated data.

6. A method as claimed in any preceding claim wherein the memory in which the second routing centre address is stored is a second memory file of a SIM card of the mobile terminal and wherein the processor performing the comparing replacing and releasing is constituted by a processor (35) of the SIM card.

7. A method as claimed in any preceding claim including updating the second routing centre address stored in the memory in response to the mobile terminal receiving a broadcast wireless updating message containing an updated routing centre address.

8. A method as claimed in claim 7 wherein the updating message is contained in an SMS message received by the mobile terminal.

9. A method as claimed in any of claims 7 and 8 wherein the updating message also contains data for updating a routing table for use in routing of voice calls made by the mobile terminal.

10. A method as claimed in claim 9 wherein the updating message originates from a control centre for preparing and broadcasting the routing table data.

11. A method as claimed in any preceding claim wherein the second routing centre is other than a message handling platform of a home network (5) with which the mobile terminal is subscription registered.

12. A method as claimed in any preceding claim wherein generating the message comprises including a fourth field (53) comprising subscriber information identifying a prepaid subscription account.

13. A method as claimed in any preceding claim wherein the routing centres are short message service centres (17,191).

14. A method as claimed in claim 13 wherein the message is an SMS message and the mobile telecommunication system is a GSM system.

15. A method as claimed in any ot claims 1 to 12 wherein the routing centres are gateways (1117,1191) to the Internet (1100).

16. A method as claimed in claim 15 wherein the mobile terminal is WAP enabled and the message is a URL request.

17. A mobile terminal (1) for use in a mobile telecommunications system in which data messages are routed to a destination (18) having destination address via a routing centre (17) selected from a plurality of available routing centres (17,191);
the terminal comprising:
input means (24) for receiving user generated data defining data content (52) of an outgoing message (34);
generating means (21) for generating a message including a first data field (50) containing a first routing centre address defining a network address of a first routing centre (191), a second data field (51) containing the destination address, and a third data field (52) containing the user generated data; and
instruction receiving means (21) for receiving an instruction to send the message;
**characterised by**;
trap means (21) for trapping the outgoing message;
a processor (35) operable to compare the first routing centre address with a second routing centre address stored in a memory (13) to which the user does not have write access and wherein the second routing centre address is determined by an administrator of the telecommunications system, and, if the addresses are different, to replace the first routing centre address by the second routing centre address in the data field; and
means (21) for releasing the outgoing message for being routed via a second routing centre identified by the second routing centre address.

18. A terminal as claimed in claim 17 wherein the first routing centre address is stored in a first memory file of the mobile terminal and wherein the generating means is operable to transfer the first routing centre address from the first memory file to the first data field of the message.

19. A terminal as claimed in claim 18 wherein the first memory file is located in a SIM card memory.

20. A terminal as claimed in any of claims 18 and 19, comprising means for updating the first memory file to contain the second routing centre address.

21. A terminal as claimed in any of claims 17 to 20, wherein the generating means comprises means for receiving the first routing centre address from an input means for the input of user generated data.

22. A terminal as claimed in claim 21 wherein the input means comprises a keypad (24) of the terminal.

23. A terminal as claimed in claim 21 wherein the input means comprises an interface for connection in use to an external data input device.

24. A terminal as claimed in any of claims 18 to 23 wherein the memory in which the second routing centre address is stored is a second memory file of a SIM card of the mobile terminal and wherein the processor operable to compare, replace and release is constituted by a processor (35) of the SIM card.

25. A terminal as claimed in any of claims 17 to 24 including means for updating the second routing centre address stored in the memory in response to the mobile terminal receiving a broadcast wireless updating message containing an updated routing centre address.

26. A terminal as claimed in claim 25 comprising means (21) for extracting the updated routing centre address from an SMS message received by the mobile terminal.

27. A terminal as claimed in any of claims 25 and 26 wherein the updating message contains data for updating a routing table (10) for use in routing of voice calls made by the mobile terminal and further comprising means for extracting the updated routing centre address from the updating message.

28. A terminal as claimed in claim 18 wherein the SIM card contains subscriber information (53) identifying a prepaid subscription account.

29. A telecommunications system comprising a mobile terminal (1) and a network (14) for routing data messages from the mobile terminal (1) to a destination (18) having destination address via a routing centre (17) selected from a plurality of available routing centres (17, 191);
the terminal comprising:
input means (24) for receiving user generated data defining data content (52) of an outgoing message (34);
generating means (21) for generating a message including a first data field (50) containing a first routing centre address defining a network address of a first routing centre (191), a second data field (51) containing the destination address, and a third data field (52) containing the user generated data;
instruction receiving means for receiving an instruction to send the message;
trap means (21) for trapping the outgoing message;
a processor (35) operable to compare the first routing centre address with a second routing centre address stored in a memory to which the user does not have write access and wherein the second routing centre address is determined by an administrator of the telecommunications system, and, if the addresses are different, to replace the first routing centre address by the second routing centre address in the data field; and
means (21) for releasing the outgoing message for being routed via a second routing centre identified by the second routing centre address;
and the system further comprising a control centre (15) operable to broadcast a wireless updating message containing an updated routing centre address, and wherein the terminal is operable to receive the updating message and to replace the second routing centre address stored in the memory with an updated routing centre address contained in the updating message.

30. A computer program product embodied as a set of processor implementable instructions stored in a storage medium and providing, when executed, computer program means for carrying out all of the steps of a method as claimed in any one of claims 1 to 16.

31. An electrical signal carrying a set of processor implementable instructions providing, when executed, computer program means for carrying out all of the steps of a method as claimed in any one of claims 1 to 16.

## Patentansprüche

1. Verfahren zum Betrieb eines Mobilterminals (1) in einem Mobiltelekommunikationssystem, in dem Datennachrichten über ein aus einer mehreren verfügbaren Leitzentren (191, 17) ausgewähltes Leitzentrum (17) an ein Ziel (18) mit einer Zieladresse geleitet werden,
wobei:
Benutzer-erzeugte Daten, die einen Dateninhalt (52) einer ausgehenden Nachricht festlegen, empfangen werden (60),
eine Nachricht (34) mit einem ersten Datenfeld (50), das eine eine Netzadresse eines ersten Leitzentrums (191) festlegende erste Leitzentrumsadresse enthält, einem zweiten Datenfeld (51), das die Zieladresse enthält, und einem dritten Datenfeld (52), das die Benutzer-erzeugten Daten enthält, erzeugt wird, und
ein Befehl zum Senden der Nachricht empfangen wird (63),
**dadurch gekennzeichnet, daß**
die ausgehende Nachricht abgefangen wird (64),
ein Prozessor zum Vergleichen (72) der ersten Leitzentrumsadresse mit einer zweiten Leitzentrumsadresse, die in einem Speicher (13) abgelegt ist, auf den der Benutzer keinen Schreibzugriff hat, betrieben wird, wobei die zweite Leitzentrumsadresse von einem Administrator des Telekommunikationssystems festgelegt ist und wobei dann, wenn die Adressen verschieden sind, im Datenfeld die erste Leitzentrumsadresse durch die zweiten Leitzentrumsadresse ersetzt wird (75), und
die ausgehende Nachricht freigegeben wird (74), um über ein von der zweiten Leitzentrumsadresse bezeichnetes zweites Leitzentrum (17) geleitet zu werden.

2. Verfahren nach Anspruch 1, wobei die erste Leitzentrumsadresse in einer ersten Speicherdatei (192) gespeichert ist, auf die der Benutzer Schreibzugriff hat und der Schritt zum Erzeugen der Nachricht das Übertragen der ersten Leitzentrumsadresse von der ersten Speicherdatei zum ersten Datenfeld der Nachricht beinhaltet.

3. Verfahren nach Anspruch 2, wobei die erste Speicherdatei in einer SIM-Karte (9) angeordnet ist.

4. Verfahren nach einem der Ansprüche 2 und 3, mit einem Schritt nach dem Vergleichsschritt, zum Aktualisieren (82) der ersten Speicherdatei, damit diese die zweite Leitzentrumsadresse enthält.

5. Verfahren nach einem der vorhergehenden Ansprüche, wobei der Erzeugungsschritt das Empfangen der ersten Leitzentrumsadresse aus einer Eingabe Benutzer-erzeugter Daten umfaßt.

6. Verfahren nach einem der vorhergehenden Ansprüche, wobei der Speicher, in dem die zweite Leitzentrumsadresse abgelegt ist, eine zweite Speicherdatei einer SIM-Karte des Mobilterminals ist und der das Vergleichen, Ersetzen und Freigeben ausführende Prozessor von einem Prozessor (35) der SIM-Karte gebildet wird.

7. Verfahren nach einem der vorhergehenden Ansprüche, wobei die in dem Speicher abgelegte zweite Leitzentrumsadresse in Reaktion darauf aktualisiert wird, daß das Mobilterminal eine ausgestrahlte Drahtlos-Aktualisierungsnachricht mit einer aktualisierten Leitzentrumsadresse empfängt.

8. Verfahren nach Anspruch 7, wobei die Aktualisierungsnachricht in einer von dem Mobilterminal empfangenen SMS-Nachricht enthalten ist.

9. Verfahren nach einem der Ansprüche 7 und 8, wobei die Aktualisierungsnachricht auch Daten zum Aktualisieren einer Leittabelle zur Verwendung beim Leiten von vom Mobilterminal getätigten Sprachrufen enthält.

10. Verfahren nach Anspruch 9, wobei die Aktualisierungsnachricht von einem Kontrollzentrum zum Vorbereiten und Ausstrahlen der Leittabellen-Daten stammt.

11. Verfahren nach einem der vorhergehenden Ansprüche, wobei das zweite Leitzentrum von einer Nachrichtenhandhabungsplattform eines Heimatnetzes (5), bei dem das Mobilterminal als Teilnehmer registriert ist, verschieden ist.

12. Verfahren nach einem der vorhergehenden Ansprüche, wobei das Erzeugen der Nachricht, das Hineinnehmen eines vierten Felds (53) beinhaltet, das Teilnehmerinformationen enthält, die ein vorbezahltes Teilnehmerkonto bezeichnen.

13. Verfahren nach einem der vorhergehenden Ansprüche, wobei die Leitzentren Kurznachrichtendienst-Zentren (17, 191) sind.

14. Verfahren nach Anspruch 13, wobei die Nachricht eine SMS-Nachricht ist und das Mobiltelekommunikationssystem ein GSM-System ist.

15. Verfahren nach einem der Ansprüche 1 bis 12, wobei die Leitzentren Gateways (1117, 1191) zum Internet (1100) sind.

16. Verfahren nach Anspruch 15, wobei das Mobilterminal WAPfähig ist und die Nachricht eine URL-Anforderung ist.

17. Mobilterminal (1) zur Verwendung in einem Mobiltelekommunikationssystem, in dem Datennachrichten über ein aus mehreren verfügbaren Leitzentren (17, 191) ausgewähltes Leitzentrum (17) an ein Ziel (18) mit einer Zieladresse geleitet werden,
wobei das Terminal folgendes aufweist:
eine Eingabeeinrichtung (24) zum Empfang von Benutzer-erzeugten Daten, die einen Dateninhalt (52) einer ausgehenden Nachricht (34) festlegen,
eine Erzeugungseinrichtung (21) zum Erzeugen einer Nachricht mit einem ersten Datenfeld (50), das eine eine Netzadresse eines ersten Leitzentrums (191) festlegende erste Leitzentrumsadresse enthält, einem zweiten Datenfeld (51), das die Zieladresse enthält, und einem dritten Datenfeld (52), das die Benutzer-erzeugten Daten enthält, und
eine Befehlsempfangseinrichtung (21) zum Empfang eines Befehls zum Senden der Nachricht,
**gekennzeichnet durch**:
eine Abfangeinrichtung (21) zum Abfangen der ausgehenden Nachricht,
einen Prozessor (35), der zum Vergleichen der ersten Leitzentrumsadresse mit einer zweiten Leitzentrumsadresse, die in einem Speicher (13), auf den der Benutzer keinen Schreibzugriff hat, abgelegt ist, und von einem Administrator des Telekommunikationssystems festgelegt ist, und, wenn die Adressen verschieden sind, zum Ersetzen der ersten Leitzentrumsadresse **durch** die zweite Leitzentrumsadresse im Datenfeld betreibbar ist, und
eine Einrichtung zum Freigeben der ausgehenden Nachricht, damit diese über ein von der zweiten Leitzentrumsadresse bezeichnetes zweites Leitzentrum geleitet wird.

18. Terminal nach Anspruch 17, wobei die erste Leitzentrumsadresse in einer ersten Speicherdatei des Mobilterminals abgelegt ist und die Erzeugungseinrichtung betreibbar ist, die erste Leitzentrumsadresse von der ersten Speicherdatei zum ersten Datenfeld der Nachricht zu übertragen.

19. Terminal nach Anspruch 18, wobei die erste Speicherdatei in einem SIM-Karten-Speicher angeordnet ist.

20. Terminal nach einem der Ansprüche 18 und 19 mit einer Einrichtung zum Aktualisieren der ersten Speicherdatei, so daß diese die zweite Leitzentrumsadresse enthält.

21. Terminal nach einem der Ansprüche 17 bis 20, wobei die Erzeugungseinrichtung eine Einrichtung zum Empfang der ersten Leitzentrumsadresse von einer Eingabeeinrichtung zur Eingabe der Benutzer-erzeugten Daten aufweist.

22. Terminal nach Anspruch 21, wobei die Eingabeeinrichtung eine Tastatur (24) des Terminals umfaßt.

23. Terminal nach Anspruch 21, wobei die Eingabeeinrichtung ein Interface umfaßt, um bei Benutzung mit einem externen Dateneingabegerät verbunden zu werden.

24. Terminal nach einem der Ansprüche 18 bis 21, wobei der Speicher, in dem die zweite Leitzentrumsadresse abgelegt ist, eine zweite Speicherdatei einer SIM-Karte des Mobilterminals ist und der zum Vergleichen, Ersetzen und Freigeben betreibbare Prozessor von einem Prozessor (35) der SIM-Karte gebildet ist.

25. Terminal nach einem der Ansprüche 17 bis 24 mit einer Einrichtung zum Aktualisieren der in dem Speicher abgelegten zweiten Leitzentrumsadresse in Reaktion darauf, daß das Mobilterminal eine ausgestrahlte Drahtlos-Aktualisierungsnachricht empfängt, die eine aktualisierte Leitzentrumsadresse enthält.

26. Terminal nach Anspruch-25 mit einer Einrichtung (21) zum Gewinnen der aktualisierten Leitzentrumsadresse aus einer von dem Mobilterminal empfangenen SMS-Nachricht.

27. Terminal nach einem der Ansprüche 25 bis 26, wobei die Aktualisierungsnachricht Daten zum Aktualisieren einer Leittabelle (10) zur Verwendung beim Leiten von vom Mobilterminal getätigten Sprachrufen enthält und das Terminal eine Einrichtung zum Gewinnen der aktualisierten Leitzentrumsadresse aus der Aktualisierungsnachricht aufweist.

28. Terminal nach Anspruch 18, wobei die SIM-Karte Teilnehmerinformationen (53) enthält, die ein vorbezahltes Teilnehmerkonto bezeichnen.

29. Telekommunikationssystem mit einem Mobilterminal (1) und einem Netz (14) zum Leiten von Datennachrichten vom Mobilterminal (1) über ein aus mehreren verfügbaren Leitzentren (17, 191) ausgewähltes Leitzentrum (17) an ein Ziel (18) mit einer Zieladresse,
wobei das Terminal folgendes aufweist:
eine Eingabeeinrichtung (24) zum Empfang von Benutzer-erzeugten Daten, die einen Dateninhalt (52) einer ausgehenden Nachricht (34) festlegen,
eine Erzeugungseinrichtung (21) zum Erzeugen einer Nachricht mit einem ersten Datenfeld (50), das eine eine Netzadresse eines ersten Leitzentrums (191) festlegende erste Leitzentrumsadresse enthält, einem zweiten Datenfeld (51), das die Zieladresse enthält, und einem dritten Datenfeld (52), das die Benutzer-erzeugten Daten enthält,
eine Befehlsempfangseinrichtung zum Empfang eines Befehls zum Senden der Nachricht,
eine Abfangeinrichtung (21) zum Abfangen der ausgehenden Nachricht,
einen Prozessor (35), der zum Vergleichen der ersten Leitzentrumsadresse mit einer zweiten Leitzentrumsadresse, die in einem Speicher, auf den der Benutzer keinen Schreibzugriff hat, abgelegt ist und von einem Administrator des Telekommunikationssystem festgelegt ist, und, wenn die Adressen verschieden sind, zum Ersetzen der ersten Leitzentrumsadresse durch die zweite Leitzentrumsadresse im Datenfeld betreibbar ist, und
eine Einrichtung (21) zum Freigeben der ausgehenden Nachricht, damit diese über ein von der zweiten Leitzentrumsadresse bezeichnetes zweites Leitzentrum geleitet wird,
wobei das System außerdem ein Kontrollzentrum (15) aufweist, das zum Ausstrahlen einer Drahtlos-Aktualisierungsnachricht betreibbar ist, die eine aktualisierte Leitzentrumsadresse enthält, und wobei das Terminal zum Empfang der Aktualisierungsnachricht und zum Ersetzen der im Speicher abgelegten zweiten Leitzentrumsadresse durch eine in der Aktualisierungsnachricht enthaltene aktualisierte Leitzentrumsadresse betreibbar ist.

30. Computerprogrammprodukt als Satz Prozessor-implementierbarer Anweisungen, die in einem Speichermedium gespeichert sind und bei Ausführung eine Computerprogrammeinrichtung zum Ausführen aller Schritte eines Verfahrens nach einem der Ansprüche 1 bis 16 bilden.

31. Elektrisches Signal, das einen Satz Prozessor-implementierbarer Anweisungen trägt, die bei Ausführung eine Computerprogrammeinrichtung zum Ausführen aller Schritte eines Verfahrens nach einem der Ansprüche 1 bis 16 bilden.

## Revendications

1. Procédé de fonctionnement d'un terminal mobile (1) dans un système de télécommunications mobile dans lequel des messages de données sont routés vers une destination (18) ayant une adresse de destination, via un centre de routage (17) sélectionné parmi une pluralité de centres de routage (191, 17) disponibles, le procédé comprenant les étapes consistant à :
recevoir (60) des données produites par l'utilisateur définissant le contenu de données (52) d'un message sortant ;
produire un message (34) comprenant un premier champ de données (50) contenant une première adresse de centre de routage, définissant une adresse de réseau d'un premier centre de routage (191), un deuxième champ de données (51) contenant l'adresse de destination, et un troisième champ de données (52) contenant les données produites par l'utilisateur ; et
recevoir (63) une instruction pour envoyer le message ;
**caractérisé par** les étapes consistant à :
intercepter (64) le message sortant ;
lancer un processeur afin de comparer (72) la première adresse de centre de routage et la deuxième adresse de centre de routage stockée dans une mémoire (13) à laquelle l'utilisateur n'a pas accès en écriture, la deuxième adresse de centre de routage étant déterminée par un administrateur du système de télécommunications, et, si les adresses sont différentes, remplacer (75) la première adresse de centre de routage par la deuxième adresse de centre de routage dans le champ de données ; et
libérer (74) le message sortant pour qu'il soit routé via le deuxième centre de routage (17) identifié par la deuxième adresse de centre de routage.

2. Procédé selon la revendication 1, dans lequel la première adresse de centre de routage est stockée dans un premier fichier en mémoire (192) auquel l'utilisateur a un accès en écriture, et dans lequel l'étape de production du message comprend le transfert de la première adresse de centre de routage entre le premier fichier en mémoire et le premier champ de données dans le message.

3. Procédé selon la revendication 2, dans lequel le premier fichier en mémoire est situé dans une carte SIM (9).

4. Procédé selon l'une quelconque des revendications 2 et 3, comprenant en outre, après l'étape de comparaison, une étape consistant à mettre à jour (82) le premier fichier en mémoire afin qu'il contienne la deuxième adresse de centre de routage.

5. Procédé selon l'une quelconque des revendications précédentes, dans lequel l'étape de production comprend l'étape consistant à recevoir la première adresse de centre de routage par une saisie de données produites par l'utilisateur.

6. Procédé selon l'une quelconque des revendications précédentes, dans lequel la mémoire dans laquelle la deuxième adresse de centre de routage est stockée, est un second fichier en mémoire sur une carte SIM du terminal mobile et dans lequel le processeur réalisant la comparaison, le remplacement et la libération est constitué d'un processeur (35) de la carte SIM.

7. Procédé selon l'une quelconque des revendications précédentes, comprenant l'étape consistant à mettre à jour la deuxième adresse de centre de routage stockée dans la mémoire en réponse à la réception, par le terminal mobile, d'un message de mise à jour sans fil à diffusion générale qui contient une adresse de centre de routage mise à jour.

8. Procédé selon la revendication 7, dans lequel le message de mise à jour est contenu dans un message SMS reçu par le terminal mobile.

9. Procédé selon l'une quelconque des revendications 7 et 8, dans lequel le message de mise à jour contient également des données pour mettre à jour une table de routage destinée à être utilisée dans le routage d'appels vocaux envoyés par le terminal mobile.

10. Procédé selon la revendication 9, dans lequel le message de mise à jour provient d'un centre de commande destiné à préparer et à diffuser les données de la table de routage.

11. Procédé selon l'une quelconque des revendications précédentes, dans lequel le deuxième centre de routage est différent d'une plate-forme de gestion de messages d'un réseau de rattachement (5) auprès duquel le terminal mobile est enregistré par un abonnement.

12. Procédé selon l'une quelconque des revendications précédentes, dans lequel l'étape de production du message comprend l'inclusion d'un quatrième champ (53) contenant des informations d'abonné qui identifient un compte d'abonnement prépayé.

13. Procédé selon l'une quelconque des revendications précédentes, dans lequel les centres de routage sont des centres de service de messages courts (17, 191).

14. Procédé selon la revendication 13, dans lequel le message est un message SMS et le système de télécommunications mobile est un système GSM.

15. Procédé selon l'une quelconque des revendications 1 à 12, dans lequel les centres de routage sont des passerelles (1117, 1191) vers l'internet (1100).

16. Procédé selon la revendication 15, dans lequel le terminal mobile a des fonctions WAP et le message est une demande d'URL.

17. Terminal mobile (1) destiné à être utilisé dans un système de télécommunications mobile dans lequel des messages de données sont routés vers une destination (18) ayant une adresse de destination, via un centre de routage (17) sélectionné parmi une pluralité de centres de routage (17, 191) disponibles, le terminal comprenant :
un moyen d'entrée (24) destiné à recevoir des données produites par l'utilisateur définissant le contenu de données (52) d'un message sortant (34) ;
un moyen de production (21) destiné à produire un message comprenant un premier champ de données (50) contenant une première adresse de centre de routage, définissant une adresse de réseau d'un premier centre de routage (191), un deuxième champ de données (51) contenant l'adresse de destination, et un troisième champ de données (52) contenant les données produites par l'utilisateur ; et
un moyen de réception d'instructions (21) destiné à recevoir une instruction pour envoyer le message ;
**caractérisé par** :
un moyen d'interception (21) destiné à intercepter le message sortant ;
un processeur (35) en mesure de comparer la première adresse de centre de routage et la deuxième adresse de centre de routage stockée dans une mémoire (13) à laquelle l'utilisateur n'a pas accès en écriture, la deuxième adresse de centre de routage étant déterminée par un administrateur du système de télécommunications, et, si les adresses sont différentes, de remplacer la première adresse de centre de routage par la deuxième adresse de centre de routage dans le champ de données ; et
un moyen (21) destiné à libérer le message sortant pour qu'il soit routé via le deuxième centre de routage identifié par la deuxième adresse de centre de routage.

18. Terminal selon la revendication 17, dans lequel la première adresse de centre de routage est stockée dans un premier fichier en mémoire du terminal mobile et dans lequel le moyen de production est en mesure de transférer la première adresse de centre de routage entre le premier fichier en mémoire et le premier champ de données du message.

19. Terminal selon la revendication 18, dans lequel le premier fichier en mémoire est situé dans une mémoire de carte SIM.

20. Terminal selon l'une quelconque des revendications 18 et 19, comprenant un moyen destiné à mettre à jour le premier fichier en mémoire afin qu'il contienne la deuxième adresse de centre de routage.

21. Terminal selon l'une quelconque des revendications 17 à 20, dans lequel le moyen de production comprend un moyen destiné à recevoir la première adresse de centre de routage en provenance d'un moyen de saisie destiné à la saisie de données produites par l'utilisateur.

22. Terminal selon la revendication 21, dans lequel le moyen de saisie est constitué d'un clavier (24) du terminal.

23. Terminal selon la revendication 21, dans lequel le moyen de saisie est constitué d'une interface destinée à connecter en service un dispositif extérieur de saisie de données.

24. Terminal selon l'une quelconque des revendications 18 à 23, dans lequel la mémoire dans laquelle est stockée la deuxième adresse de centre de routage, est un second fichier en mémoire d'une carte SIM du terminal mobile et dans lequel le processeur en mesure d'effectuer la comparaison, le remplacement et la libération est constitué d'un processeur (35) de la carte SIM.

25. Terminal selon l'une quelconque des revendications 17 à 24, comprenant un moyen destiné à mettre à jour la deuxième adresse de centre de routage stockée dans la mémoire en réponse à la réception, par le terminal mobile, d'un message de mise à jour sans fil à diffusion générale qui contient une adresse de centre de routage mise à jour.

26. Terminal selon la revendication 25, comprenant un moyen (21) destiné à extraire l'adresse de centre de routage mise à jour d'un message SMS reçu par le terminal mobile.

27. Terminal selon l'une quelconque des revendications 25 et 26, dans lequel le message de mise à jour contient des données pour mettre à jour une table de routage (10) destinée à être utilisée dans le routage d'appels vocaux envoyés par le terminal mobile et comprenant en outre un moyen destiné à extraire l'adresse de centre de routage mise à jour du message de mise à jour.

28. Terminal selon la revendication 18, dans lequel la carte SIM contient des informations d'abonné (53) qui identifient un compte d'abonnement prépayé.

29. Système de télécommunications comprenant un terminal mobile (1) et un réseau (14) destiné à router des messages de données entre le terminal mobile (1) et une destination (18) ayant une adresse de destination, via un centre de routage (17) sélectionné parmi une pluralité de centres de routage (17, 191) disponibles, le terminal comprenant :
un moyen d'entrée (24) destiné à recevoir des données produites par l'utilisateur définissant le contenu de données (52) d'un message sortant (34) ;
un moyen de production (21) destiné à produire un message comprenant un premier champ de données (50) contenant une première adresse de centre de routage, définissant une adresse de réseau d'un premier centre de routage (191), un deuxième champ de données (51) contenant l'adresse de destination, et un troisième champ de données (52) contenant les données produites par l'utilisateur ; et
un moyen de réception d'instructions destiné à recevoir une instruction pour envoyer le message ;
un moyen d'interception (21) destiné à intercepter le message sortant ;
un processeur (35) en mesure de comparer la première adresse de centre de routage et la deuxième adresse de centre de routage stockée dans une mémoire (13) à laquelle l'utilisateur n'a pas accès en écriture, la deuxième adresse de centre de routage étant déterminée par un administrateur du système de télécommunications, et, si les adresses sont différentes, de remplacer la première adresse de centre de routage par la deuxième adresse de centre de routage dans le champ de données ; et
un moyen (21) destiné à libérer le message sortant pour qu'il soit routé via le deuxième centre de routage identifié par la deuxième adresse de centre de routage ;
et le système comprenant en outre un centre de commande (15) en mesure de diffuser un message de mise à jour sans fil contenant une adresse de centre de routage mise à jour, le terminal étant en mesure de recevoir le message de mise à jour et de remplacer la deuxième adresse de centre de routage stockée dans la mémoire par une adresse de centre de routage mise à jour contenue dans le message de mise à jour.

30. Progiciel d'ordinateur matérialisé sous la forme d'un ensemble d'instructions pouvant être mises en oeuvre par un processeur qui est stocké dans un moyen de stockage et qui, lorsqu'il est exécuté, fournit un moyen de programme d'ordinateur destiné à exécuter toutes les étapes d'un procédé selon l'une quelconque des revendications 1 à 16.

31. Signal électrique transportant un ensemble d'instructions pouvant être mises en oeuvre par un processeur qui, lorsqu'il est exécuté, fournit un moyen de programme d'ordinateur destiné à exécuter toutes les étapes d'un procédé selon l'une quelconque des revendications 1 à 16.
